**Europäisches Patentamt**

**European Patent Office**

**Office européen des brevets**

(19)

(11) Numéro de publication: **0 044 772**
**B1**

(12)

# FASCICULE DE BREVET EUROPEEN

(45) Date de publication du fascicule du brevet:
25.04.84

(51) Int. Cl.³: **F 16 D 55/224**

(21) Numéro de dépôt: 81401116.9

(22) Date de dépôt: 09.07.81

(54) Frein à disque à étrier mobile.

(30) Priorité: 22.07.80 IT 2360880

(43) Date de publication de la demande:
27.01.82 Bulletin 82/4

(45) Mention de la délivrance du brevet:
25.04.84 Bulletin 84/17

(84) Etats contractants désignés:
DE FR GB SE

(56) Documents cités:
DE - B - 1 249 606
FR - A - 1 268 862
FR - A - 1 368 280
FR - A - 1 431 745
FR - A - 2 012 084
FR - E - 88 388
GB - A - 1 165 780
GB - A - 1 190 605
GB - A - 1 346 497
US - A - 3 258 089

(73) Titulaire: **BENDITALIA S.p.A., Via Cavalli 53/A,
I-26013 Crema (IT)**

(72) Inventeur: **Cadeddu, Leonardo, Via Piacenza 29,
I-26013 Crema (IT)**

(74) Mandataire: **Poidatz, Emmanuel et al, Service Brevets
Bendix 44 rue François 1er, F-75008 Paris (FR)**

BUNDESDRUCKEREI BERLIN

## Frein à disque à e'trier mobile

L'invention a pour objet un frein à disque à étrier mobile notamment pour véhicule automobile.

L'invention concerne en particulier un frein à disque du type à étrier mobile dont l'étrier est monté mobile sur un support fixe dans lequel sont reçus en ancrage et en coulissement deux éléments de friction susceptibles de venir en engagement de friction avec les faces opposées d'un disque tournant lors de la mise en œuvre de moyens d'actionnement constitués d'un moteur de frein agissant directement sur l'un des éléments de friction et agissant sur l'autre élément de friction par réaction au travers de l'étrier mobile.

On connaît du brevet français publié sous le N° 1 431 745 et plus précisément de la deuxième addition au brevet mentionné ci-dessus publiée sous le N° 88 388 un frein à disque du type défini ci-dessus dans lequel l'étrier coulisse sur le support fixe au moyen de deux clavettes de guidage intercalées entre ledit étrier et ledit support fixe, ledit étrier étant plaqué sur lesdites clavettes au moyen d'un ressort prenant appui sur une échancrure pratiqée dans le support fixe. Les clavettes assurent un guidage axial c'est-à-dire dans le sens de l'axe du disque tournant et interdisent les mouvements circonférentiels de l'étrier par rapport au support fixe lors de la mise en œuvre du moteur du frein.

Dans ce type de frein, il existe nécessairement des frottements de coulissement entre l'étrier et les clavettes immobilisées par rapport au support fixe. Le bon fonctionnement d'un frein de ce type dépend en grande partie de la qualité du coulissement de l'étrier de façon à appliquer simultanément un effort égal sur les deux éléments de friction. Le coulissement de cet étrier est donc tributaire des états de surface de l'étrier et des clavettes dans les zones de coulissement. Ces surfaces de contact, fondamentales au bon fonctionnement du frein, peuvent voir leur état de surface diminuer de qualité par suite d'une possible corrosion ou d'une interposition de poussière, sable ou tout encrassement. L'effort de coulissement de l'étrier pourra donc augmenter et même aller jusqu'à bloquer complètement ledit étrier par rapport aux clavettes. Ces inconvénients peuvent provoquer des pertes d'efficacité de freinage ou une usure dissymétrique des deux éléments de friction.

Dans la demande de brevet FR-A-2 012 084, l'étrier est tenu sur le support fixe au moyen de bandes flexibles permettant les déplacements axiaux de l'étrier. Néanmoins l'étrier reçoit la partie du couple de freinage engendrée par l'élément de friction extérieur et doit donc trouver une surface de réaction sur le support fixe. Cette surface doit être, ou bien, proche de l'étrier pour éviter les claquements à l'application du freinage et alors, les risques de corrosion ou d'encrassement existent, ou bien, cette surface est éloignée et alors, les risques de mattage et de détérioration des surfaces d'appui dues aux claquements apparaissent.

L'invention a pour objet un frein à disque du type décrit ci-dessus dans lequel de tels inconvénients sont évités.

Dans ce but, l'invention propose un frein à disque comportant un support fixe, deux éléments de friction reçus en ancrage et en coulissement dans ledit support fixe et un étrier susceptible de se déplacer par rapport au support fixe parallèlement à l'axe d'un disque tournant lors de la mise en œuvre d'un moteur de frein pour solliciter directement un élément de friction en engagement de friction avec une première face dudit disque et par réaction un deuxième élément de friction avec une deuxième face dudit disque, ledit étrier étant relié au support fixe par des moyens élastiques de liaison susceptibles de se déformer pour permettre le déplacement axial de l'étrier, caractérisé en ce que lesdits moyens de liaison comportent des éléments élastiques de positionnement dudit étrier par rapport au support fixe pour éviter la venue en contact de l'étrier sur une quelconque partie du support fixe lors des déplacements de l'étrier notamment lors de la mise en œuvre du moteur de frein.

On décrira maintenant à titre d'exemple non limitatif, un mode de réalisation préférentiel de l'invention en se référant aux dessins annexés dans lesquels:

— la figure 1 est une vue en perspective d'un frein à disque réalisé conformément à l'invention;

— la figure 2 est une vue de dessus du frein à disque de la figure 1 représenté dans la position moyenne d'usure des éléments de friction et montrant les positions de l'étrier lorsque les éléments de friction sont soit à l'état neuf soit à l'état complètement usé;

— la figure 3 est une vue de face du frein de la figure 1 dont une moitié est représentée en coupe transversale suivant la ligne A-A de la figure 2;

— la figure 4 est une vue de côté du frein de la la figure 1 dont une partie est représentée en coupe suivant les lignes B-B de la figure 2 et C-C de la figure 3, l'étrier étant dans la position correspondant à l'usure moitié des éléments de friction et montrant l'étrier lorsque les éléments de friction sont soit à l'état neuf soit à l'état complètement usé;

— la figure 5 est une vue de côté du frein de la figure 1 après démontage de l'étrier, montrant l'extraction des éléments de friction;

— la figure 6 est une vue des moyens de liaison avant le montage sur le frein.

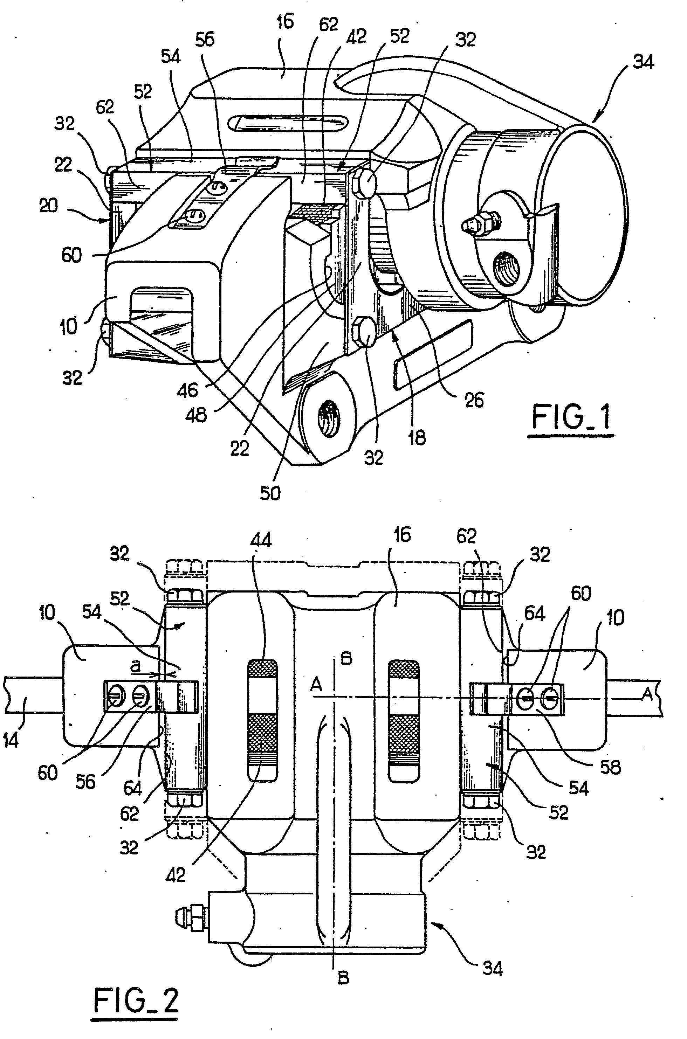

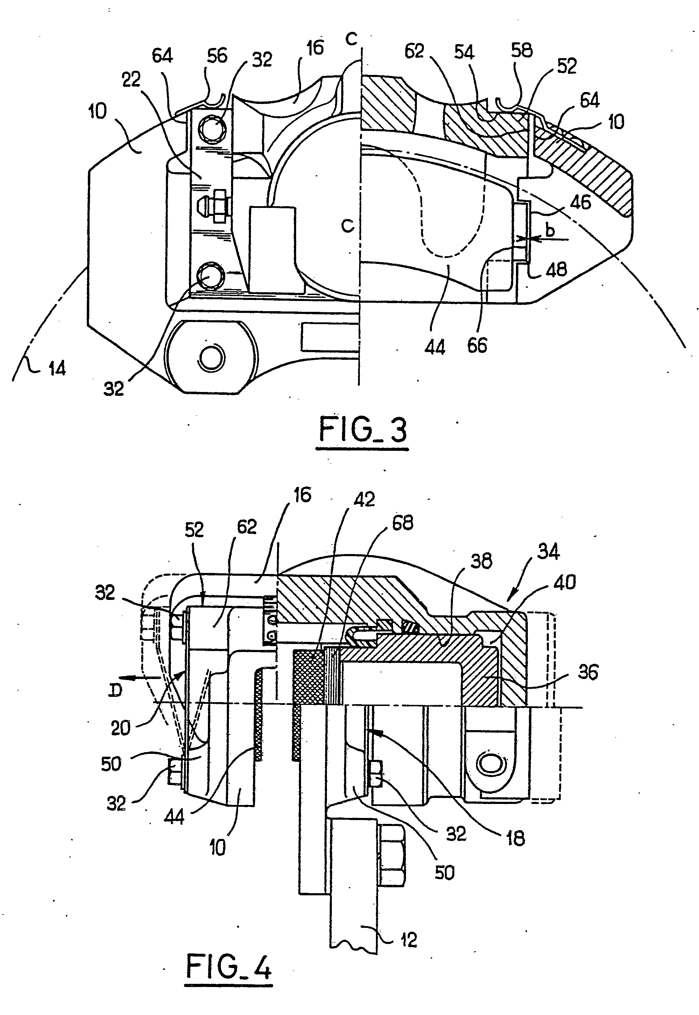

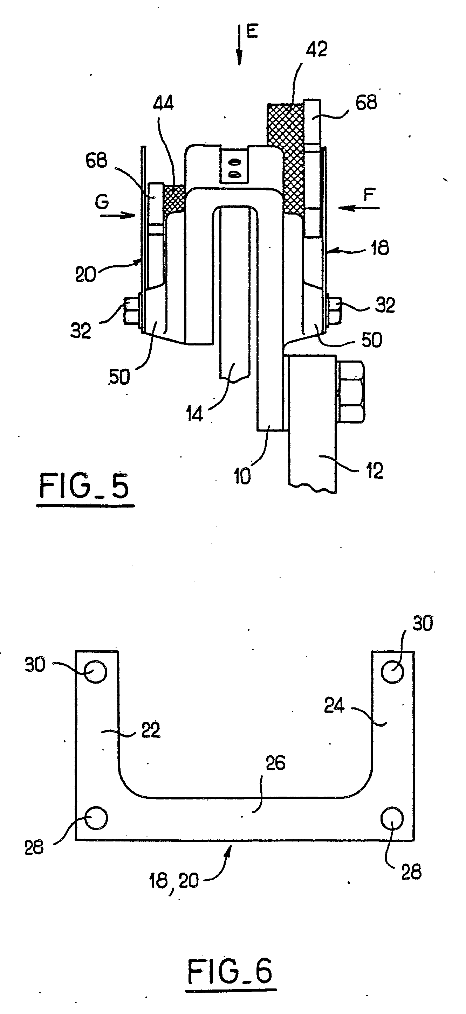

Le frein à disque représenté sur les figures 1 à 4 comporte un support fixe 10 prévu pour être associé à une partie fixe du véhicule 12 et est constitué dans le mode de réalisation représenté par une plaque disposée au voisinage d'un disque 14 prévu pour être associé en rotation à une roue du véhicule (non représentée). Le support fixe 10 reçoit l'étrier mobile 16 par l'intermédiaire de moyens de liaison 18 et 20. Dans le mode de réalisation représenté (voir figure 6), ces moyens de liaison sont formés dans une plaque d'acier à ressort et comportent chacune deux lames 22 et 24 et une portion de renforcement 26. Chacune des lames 22 et 24 comporte des orifices 28 et 30 à travers lesquels passent des boulons 32 pour assurer la fixation d'une part avec le support fixe (orifice 28) d'autre part avec l'étrier mobile (orifice 30). L'étrier mobile 16 comporte des moyens d'actionnement 34 constitués par un moteur de frein hydraulique (voir figure 4) comprenant un piston 36 monté coulissant dans un alésage 38 défini dans l'étrier 16 et sensible à la pression régnant dans une chambre de commande 40 susceptible d'être reliée à une source de pression telle que par exemple le maître-cylindre du véhicule (non représenté). Le piston 36 est disposé de façon à solliciter directement un premier élément de friction 42 contre une première face du disque 14 lorsque le fluide sous pression est admis dans la chambre 40. L'étrier mobile 16 est susceptible de se déplacer par réaction entraînant la flexion axiale, c'est-à-dire parallèle à l'axe du disque, de chacune des lames 22 et 24 afin de solliciter un second élément de friction 44 contre l'autre face du disque 14. Comme le montrent en particulier les figures 1 et 3, l'élément de friction 42 est supporté en coulissement et en ancrage par des bords circonférentiellement espacés 46 d'une ouverture 48 ménagée dans le support fixe 10. D'une manière identique, l'élément de friction 44 est également reçu en ancrage et en coulissement sur le support fixe 10.

Dans le mode de réalisation représenté, et comme le montre plus particulièrement les figures 1 et 4, les moyens de liaison 18 et 20 comportant les lames 22 et 24 sont associés au support fixe 10 par des liaisons filetées. Plus précisément, les lames 22 et 24 sont fixées au moyen des boulons 32 traversant les orifices 28 reçus dans des taraudages réalisés dans les saillies 50 formées sur le support fixe 10. Les boulons sont vissés au moyen d'une clé appropriée (non représentée). D'une façon similaire, les lames 22 et 24 sont fixées à l'étrier mobile 16 au moyen de boulons 32 passant à travers les orifices 30 des lames 22 et 24 et vissés à l'aide d'une clé correspondante (non représentée) sur des saillies 52, formées sur l'étrier 16. Les saillies 52 comportent une portion 54 sur laquelle viennent en appui des lames élastiques 56 et 58 circonférentiellement espacées et fixées sur le support fixe 10 au moyen de boulons 60. Les lames 56 et 58 exercent un effort radial sur la portion 54 des saillies 52 assurant par la friction qui est susceptible d'apparaître entre lesdites lames 56 et 58 et lesdites portions 54, un engagement de friction jouant le rôle de moyens d'amortissement des mouvements dudit étrier.

Les bords circonférentiellement espacés 62 de l'étrier mobile 16 porté par les saillies 52 sont placés en vis-à-vis des bords 64 circonférentiellement espacés formés dans le support fixe. La distance »a« entre les bords 62 et 64 est supérieure à la distance »b« qui apparaît entre les bords circonférentiellement espacés 66 des éléments de friction 42 et 44 et les bords 46 circonférentiellement espacés de l'ouverture 48.

Conformément à l'invention, les moyens de liaison 18 et 20 comportant les lames 22 et 24 présentent une grande flexibilité dans le sens axial. En effet, l'épaisseur de la plaque d'acier à ressort est faible par rapport à la largeur des lames 22 et 24. Lorsque l'étrier est sollicité axialement par le moteur de frein 34, le déplacement de l'étrier 16 ne dépend que de la résistance à la flexion des lames 22 et 24 et du frottement des lames 56 et 58 venant en engagement de friction avec les portions 54 des saillies.

Lorsque les éléments de friction sont à l'état neuf, les lames 22 et 24 des moyens de liaison 18 et 20 sont précontraintes dans la direction de la flèche A comme indiqué figure 4. Au fur et à mesure de l'usure des éléments de friction, les lames 22 et 24 seront de moins en moins précontraintes et, pour une valeur sensiblement égale à la moitié de l'usure acceptable pour les éléments de friction, les lames 22 et 24 se trouveront à l'état libre, c'est-à-dire dans une position sans précontrainte proche de celle qu'elles avaient avant montage sur le frein. On comprendra que pour une usure des éléments de friction supérieure à la moitié de la valeur totale, les lames 22 et 24 prendront une précontrainte dans le sens opposé par rapport à celle apparaissant à la position initiale. Dans le mode de réalisation préférentiel représenté, les moyens de liaison 18 et 20 sont plans. Il apparaît que les lames 22 et 24 réalisées en acier à ressort exerceront un effort de rappel tendant à mettre l'étrier dans une position correspondante à la forme des lames 22 et 24 qu'elles auraient à l'état libre avant montage dans le frein. Cet effort de rappel faible doit être amorti à l'aide de moyens d'amortissement qui dans le mode de réalisation représenté sont des lames 56 et 58 montées sur le support fixe 10. Il en sera de même de toute sollicitation de l'étrier dans le sens axial pouvant être provoqué par les mouvements du véhicule tendant à déplacer l'étrier par la force centrifuge ou par tout mouvement parasite, par exemple les mouvements vibratoires.

Comme on le voit plus particulièrement sur la figure 2 les moyens de liaison 18 et 20 et plus particulièrement les lames 22 et 24 de chacun desdits moyens de liaison forment un quadrilatère qui permet de maintenir l'axe de l'étrier parallèle à l'axe du disque 14.

Lorsqu'une pression hydraulique est appli-

quéé dans la chambre de commande 40 le piston 36 s'applique sur l'élément de friction 42 provoquant l'engagement de friction de celui-ci avec le disque de frein 14. Par réaction le deuxième élément de friction 44 sera également appliqué sur le disque. L'engagement de friction qui apparaît ainsi sur les éléments de friction va entraîner ceux-ci dans une direction circonférentielle, et les frottements qui existent entre les supports de garnitures 68 des deux éléments de friction et d'une part le piston 36 pour l'élément de friction 42 et d'autre part la partie de l'étrier venant s'appliquer sur l'élément de friction 44 provoquent sur ledit étrier 16 un mouvement circonférentiel dans le même sens que le sens de rotation du disque 14. Le jeu circonférentiel »b« qui existe entre les éléments de friction 42 et 44 et le support fixe 10 c'est-à-dire entre les bords circonférentiellement espacés 66 des éléments de friction et les bords circonférentiellement espacés 46 du support fixe est tel que lors de l'entraînement des éléments de friction et de l'étrier par l'engagement de friction sur le disque, le jeu »b« deviendra nul avant qu'une partie de l'étrier ne vienne en contact avec un point quelconque du support fixe.

Le mouvement très faible de l'étrier qui correspond à ce que le jeu »b« devienne nul provoque une légère torsion des lames 22 et 24 des moyens de liaison 18 et 20. Lorsque la pression hydraulique est relâchée, la torsion provoquée sur les lames 22 et 24 est susceptible de ramener l'étrier 16 dans sa position initiale, c'est-à-dire dans une position centrée par rapport au support fixe.

La distance »a« qui existe entre les saillies 52 et les bords circonférentiellement espacés 64 du support fixe est au moins deux fois plus grande que la distance »b« entre une extrémité d'un élément de friction et le bord 46 de l'ouverture 48 du support fixe. Il apparaît donc que à aucun moment l'étrier 16 ne pourra venir en contact avec le support fixe.

L'opération de montage du frein s'effectue de la façon suivante:

Le support fixe 10 est préalablement monté sur la partie fixe du véhicule 12. Le support fixe étant équipé des moyens de liaison 18 et 20 à l'aide des boulons 32 montés à travers les orifices 28 dans des taraudages formés dans les saillies 50 du support fixe. Comme le montre plus particulièrement la figure 5, les moyens de liaison 18 et 20 étant en position de repos sont plans. Les éléments de friction sont introduits suivant la flèche E comme indiqué figure 5, les supports de garniture 68 passant entre les moyens de liaison 18 et 20 et le support fixe 10. Les éléments de friction sont placés en vis à vis des ouvertures 48 réalisées dans le support fixe. L'élément de friction 42 est ensuite introduit dans ladite ouverture 48 suivant la flèche F. De même, l'élément de friction 44 est introduit dans l'ouverture 48 suivant la flèche G. L'étrier 16 est alors présenté entre les moyens de liaison 18 et 20 et fixé sur lesdits moyens de liaison à l'aide des boulons 32 passant à travers les orifices 30 des lames 22 et 24. Les éléments de friction étant à l'état neuf, le montage de l'étrier se fera avec une précontrainte sur les lames 22 et 24 qui prendront une position fléchie comme indiqué sur la figure 4. Les moyens d'amortissement 56 et 58 seront alors montés sur le support fixe à l'aide des boulons 60.

Le démontage du frein s'effectue dans l'ordre inverse des opérations qui viennent d'être décrites.

Il apparaît donc, à la lecture de ce qui précède, que l'étrier mobile se déplace par rapport au support fixe grâce à la flexion des moyens de liaison 18 et 20. Ces moyens de liaison assurant le guidage de l'étrier parallèlement à l'axe du disque du frein sans contact entre l'étrier et une quelconque partie du support fixe, la torsion des lames assurant le positionnement dudit étrier par rapport au support fixe dans le sens circonférentiel. Les moyens d'amortissement 56 et 58 assurent la stabilité de l'étrier lors de diverses sollicitations en particulier des vibrations du véhicule.

**Revendications**

1. Frein à disque comportant un support fixe (10), deux éléments de friction reçus en ancrage et coulissement dans ledit support fixe et un étrier (16) susceptible de se déplacer par rapport au support fixe parallèlement à l'axe d'un disque tournant (14) lors de la mise en œuvre d'un moteur de frein (34) pour solliciter directement un élément de friction (42) en engagement de friction avec une première face dudit disque (14) et, par réaction à travers ledit étrier, un deuxième élément de friction (44) avec une deuxième face dudit disque (14), ledit étrier (16) étant relié au support fixe (10) par des moyens élastiques de liaison (18, 20) susceptibles de se déformer pour permettre le déplacement axial de l'étrier (16), caractérisé en ce que lesdits moyens de liaison (18, 20) comportent des éléments élastiques (22, 24) de positionnement dudit étrier (16) par rapport au support fixe (10) pour éviter la venue en contact de l'étrier (16) sur une quelconque partie du support fixe (10) lors des déplacements de l'étrier (16) notamment lors de la mise en œuvre du moteur de frein (34).

2. Frein à disque suivant la revendication 1, caractérisé en ce que le jeu circonférentiel (b) entre lesdits éléments de friction (42, 44) et des ouvertures d'ancrage et de coulissement (48) desdits éléments de friction dans le support fixe (10) est inférieur au jeu circonférentiel (a) entre l'étrier (16) et une quelconque partie du support fixe (10).

3. Frein à disque suivant la revendication 2, caractérisé en ce que lesdits moyens de liaison (18, 20) sont réalisés en lames d'acier à ressort (22, 24) fixées à une de leurs extrémités audit étrier (16) et à l'autre extrémité audit support fixe (10), l'épaisseur desdites lames (22, 24) s'étendant sensiblement axialement de manière à présenter une grande flexibilité dans le sens axial.

4. Frein à disque selon l'une quelconque des revendications 1 à 3, caractérisé en ce que lesdits moyens de liaison (18, 20) sont fixés audit étrier (16) d'une part et audit support fixe (10) d'autre part au moyen de liaisons filetées (32).

5. Frein à disque selon les revendications 3 ou 4, caractérisé en ce que lesdites lames d'acier à ressort (22, 24) forment un quadrilatère de manière à maintenir l'axe dudit étrier (16) parallèle à l'axe dudit disque tournant (14).

6. Frein à disque selon la revendication 5, caractérisé en ce qu'au moins deux lames (22, 24) sont montées de chaque côté dudit disque.

7. Frein à disque selon la revendication 6, caractérisé en ce que deux lames d'acier (22, 24) d'un même côté du disque sont reliées par une portion de renforcement (26).

8. Frein à disque selon la revendication 7, caractérisé en ce que deux lames d'acier (22, 24) d'un même côté du disque et la portion de renforcement (26) les reliant sont réalisées dans une même pièce en acier à ressort.

9. Frein à disque selon l'une quelconque des revendications 3 à 8, caractérisé en ce que lesdites lames d'acier (22, 24) sont montées avec une précontrainte dans le sens axial lorsque les éléments de friction (42, 44) sont à l'état neuf, cette précontrainte s'annulant lorsque les éléments de friction sont sensiblement à la valeur moitié de leur usure.

10. Frein à disque selon la revendication 9, caractérisé en ce que lesdites lames d'acier (22, 24) sont sensiblement planes lorsqu'elles ne sont pas soumises à des contraintes.

11. Frein à disque selon l'une quelconque des revendications 1 à 10, caractérisé en ce qu'il comporte des moyens d'amortissement (56, 58) des mouvements dudit étrier (16).

12. Frein à disque selon la revendication 11, caractérisé en ce que lesdits moyens d'amortissement (56, 58) sont réalisés par des éléments élastiques montés sur le support fixe (10) ou sur l'étrier (16) et venant en engagement de friction avec ledit étrier (16) ou ledit support fixe (10).

13. Frein à disque selon la revendication 12, caractérisé en ce que lesdits éléments élastiques d'amortissement (56, 58) sont placés au voisinage de parois latérales (62) circonférentiellement espacés dudit étrier (16).

14. Frein à disque selon la revendication 13, caractérisé en ce que lesdits éléments élastiques d'amortissement (56, 58) sont réalisés en lames en acier à ressort montées sur ledit support fixe (10) ou ledit étrier (16) au moyen de liaisons filetées (60).

**Patentansprüche**

1. Scheibenbremse mit einem festen Bremsträger (10), zwei Reibelementen, die im Bremsträger gleitend verankert sind, und einem Bremssattel (16), der relativ zum Bremsträger parallel zur Achse einer umlaufenden Bremsscheibe (14) bei Betätigung einer Bremsbetätigungsvorrichtung (34) verschiebbar ist, um ein Reibelement (42) direkt in Reibanlage mit einer ersten Fläche der Bremsscheibe (14) zu drücken und ein zweites Reibelement (44) indirekt über den Bremssattel mit einer zweiten Fläche der Bremsscheibe (14) in Reibanlage zu drücken, wobei der Bremssattel (16) mit dem Bremsträger (10) durch elastische Verbindungsmittel (18, 20) verbunden ist, die verformbar sind, um die axiale Verschiebung des Bremssattels (16) zu ermöglichen, dadurch gekennzeichnet, daß die Verbindungsmittel (18, 20) elastische Elemente (22, 24) zur Positionierung des Bremssattels (16) bezüglich des Bremsträgers (10) aufweisen, die verhindern, daß der Bremssattel (16) mit irgendeinem Teil des Bremsträgers (10) in Berührung gelangt, wenn der Bremssattel (16) verschoben wird, insbesondere bei Betätigung der Bremsbetätigungsvorrichtung (34).

2. Scheibenbremse nach Anspruch 1, dadurch gekennzeichnet, daß das Umfangsspiel (b) zwischen den Reibelementen (42, 44) und Verankerungs- und Gleitöffnungen (48) der Reibelemente im Bremsträger (10) kleiner ist als das Umfangsspiel (a) zwischen dem Bremssattel (16) und irgendeinem Teil des Bremsträgers (10).

3. Scheibenbremse nach Anspruch 2, dadurch gekennzeichnet, daß die Verbindungsmittel (18, 20) aus Stahl-Blattfedern (22, 24) bestehen, die an einem ihrer Enden mit dem Bremssattel (16) und an ihrem anderen Ende mit dem Bremsträger (10) verbunden sind, wobei die Dicke der Blattfedern (22, 24) zwecks einer großen Flexibilität in axialer Richtung im wesentlichen axial verläuft.

4. Scheibenbremse nach einem der Ansprüche 1 bis 3, dadurch gekennzeichnet, daß die Verbindungsmittel (18, 20) einerseits am Bremssattel (16) und andererseits am Bremsträger (10) mittels Schraubverbindungen (32) festgelegt sind.

5. Scheibenbremse nach Anspruch 3 oder 4, dadurch gekennzeichnet, daß die Blattfedern (22, 24) ein Viereck bilden, derart, daß die Achse des Bremssattels (16) parallel zur Achse der umlaufenden Bremsscheibe (14) verläuft.

6. Scheibenbremse nach Anspruch 5, dadurch gekennzeichnet, daß mindestens zwei Blattfedern (22, 24) auf jeder Seite der Bremsscheibe angebracht sind.

7. Scheibenbremse nach Anspruch 6, dadurch gekennzeichnet, daß zwei Blattfedern (22, 24) auf derselben Seite der Bremsscheibe durch einen Verstärkungsabschnitt (26) verbunden sind.

8. Scheibenbremse nach Anspruch 7, dadurch gekennzeichnet, daß zwei Blattfedern (22, 24) auf derselben Seite der Scheibenbremse und die sie verbindenden Verstärkungsabschnitte (26) in einem einzigen Teil aus Federstahl verkörpert sind.

9. Scheibenbremse nach einem der Ansprüche 3 bis 8, dadurch gekennzeichnet, daß die Blattfedern (22, 24) mit einer Vorspannung in axialer Richtung montiert sind, wenn die Reibelemente (22, 24) neu sind, wobei diese Vorspannung sich aufhebt, wenn die Reibelemente ungefähr die Hälfte ihrer Lebensdauer erreicht haben.

10. Scheibenbremse nach Anspruch 9, dadurch gekennzeichnet, daß die Blattfedern (22, 24) im spannungsfreien Zustand im wesentlichen eben sind.

11. Scheibenbremse nach einem der Ansprüche 1 bis 10, gekennzeichnet durch Dämpfungsmittel (56, 58) zum Dämpfen von Bewegungen des Bremssattels (16).

12. Scheibenbremse nach Anspruch 11, dadurch gekennzeichnet, daß die Dämpfungsmittel (56, 58) von elastischen Elementen gebildet werden, die am Bremsträger (10) oder am Bremssattel (16) angebracht sind und mit dem Bremssattel (16) oder dem Bremsträger (10) in Reibberührung gelangen.

13. Scheibenbremse nach Anspruch 12, dadurch gekennzeichnet, daß die elastischen Dämpfungsmittel (56, 58) in Nähe seitlicher Wände (62) angeordnet sind, die in Umfangsrichtung einen Abstand vom Bremssattel (16) haben.

14. Scheibenbremse nach Anspruch 13, dadurch gekennzeichnet, daß die elastischen Dämpfungselemente (56, 58) aus Stahlblattfedern bestehen, die am Bremsträger (10) oder am Bremssattel (16) mittels Schraubverbindungen (60) angebracht sind.

## Claims

1. A disc brake comprising a fixed support (10), a pair of friction elements anchored and sliding in said fixed support, and a caliper (16) adapted to be displaced with respect to the fixed support parallel to the axis of a rotating disc (14) during actuation of a brake actuator (34) for urging directly one friction element (42) in frictional engagement with a first face of said disc (14) and, by reaction through said caliper, a second friction element (44) in frictional engagement with a second face of said disc (14), said caliper (16) being connected to the fixed support (10) by resilient connection means (18, 20) adapted to be deformed for permitting axial displacements of the caliper (16), characterized in that said connection means (18, 20) comprise resilient elements (22, 24) for positioning said caliper (16) with respect to the fixed support (10) in order to avoid any contact of the caliper (16) with any part of the fixed support (10) during displacements of the caliper (16), in particular during operation of the brake actuator (34).

2. Disc brake according to claim 1, characterized in that the circumferential play (b) between said friction elements (42, 44) and anchorage and sliding openings (48) of said friction elements in the fixed support (10) is smaller than the circumferential play (a) between the caliper (16) and any part of the fixed support (10).

3. The disc brake of claim 2, characterized in that said connection means (18, 20) are comprised of steel spring leafs (22, 24) fixed at one of their extremities to the caliper (16) and at the other extremity to the fixed support (10), the thickness of said leafs (22, 24) extending substantially axially such as to provide a great flexibility in the axial direction.

4. The disc brake of any of claims 1 to 3, characterized in that said connection means (18, 20) are fixed to the caliper (16) on the one hand and to the fixed support (10) on the other hand by means of threaded connection means (32).

5. The disc brake of claim 3 or claim 4, characterized in that said steel spring leafs (22, 24) form a quadrangle such as to maintain the axis of said caliper (16) parallel to the axis of said rotating disc (14).

6. The disc brake of claim 5, characterized in that at least two leafs (22, 24) are mounted on each side of said disc.

7. The disc brake of claim 6, characterized in that two steel leafs (22, 24) on the same side of the disc are interconnected by a reinforcement portion (26).

8. The disc brake of claim 7, characterized in that two steel leafs (22, 24) on the same side of the disc and the reinforcement portion (26) connecting them are comprised of a single piece of spring steel.

9. The disc brake of any of claims 3 to 8, characterized in that said steel leafs (22, 24) are mounted with a certain bias in the axial direction while the friction elements (42, 44) are in their initial conditions said bias becoming zero when the friction elements have reached substantially half of their life.

10. The disc brake of claim 9, characterized in that said steel leafs (22, 24) are substantially plane when not subjected to any stresses.

11. The disc brake of any of claims 1 to 10, characterized in that it comprises damping means (56, 58) for damping movements of said caliper (16).

12. The disc brake of claim 11, characterized in that said damping means (56, 58) are comprised of resilient elements mounted on the fixed support (10) or on the caliper (16) and are frictionally engaging said caliper (16) or said fixed support (10).

13. The disc brake of claim 12, characterized in that said resilient damping elements (56, 58) are disposed adjacent lateral walls (62) circumferentially spaced from said caliper (16).

14. The disc brake of claim 13, characterized in that said resilient damping elements (56, 58) are comprised of spring steel leafs mounted on said fixed support (10) or on said caliper (16) by means of threaded connection means (16).

FIG_1

FIG_2

FIG_3

FIG_4

0 044 772

FIG_5

FIG_6

.11